Europäisches Patentamt

(19) European Patent Office

Office européen des brevets

(11) Numéro de publication : **0 307 271 B1**

(12) **FASCICULE DE BREVET EUROPEEN**

(45) Date de publication du fascicule du brevet :
09.10.91 Bulletin 91/41

(51) Int. Cl.⁵ : **G01N 23/222**

(21) Numéro de dépôt : 88402124.7

(22) Date de dépôt : 18.08.88

(54) **Dispositif de caractérisation de matière fissile comportant au moins un détecteur de rayonnement neutronique noyé à l'intérieur d'un scintillateur de détection du rayonnement gamma.**

(30) Priorité : 21.08.87 FR 8711805

(43) Date de publication de la demande :
15.03.89 Bulletin 89/11

(45) Mention de la délivrance du brevet :
09.10.91 Bulletin 91/41

(84) Etats contractants désignés :
BE DE GB

(56) Documents cités :
EP-A- 0 220 099
US-A- 3 638 020
US-A- 3 736 429
US-A- 4 266 132

(73) Titulaire : COMMISSARIAT A L'ENERGIE ATOMIQUE Etablissement de Caractère Scientifique Technique et Industriel
31/33, rue de la Fédération
F-75015 Paris (FR)

(72) Inventeur : Bernard, Patrice
7, place des Héliades
F-13770 Venelles (FR)
Inventeur : Romeyer Dherbey, Jacques
40ter, Avenue Saint Jérome
F-13100 Aix en Provence (FR)
Inventeur : Bosser, Roland
Avenue Jean Giono
F-04860 Pierrevert (FR)
Inventeur : Berne, Roger
1 Les Jardins du Montaiguet Chemin de Grivoton
F-13100 Aix en Provence (FR)

(74) Mandataire : Mongrédien, André et al
c/o BREVATOME 25, rue de Ponthieu
F-75008 Paris (FR)

## Description

La présente invention a pour objet un dispositif de caractérisation de matière fissile comportant au moins un détecteur de rayonnement neutronique noyé à l'intérieur d'un scintillateur de détection du rayonnement gamma.

La caractérisation de la matière fissile, contenue notamment dans des déchets radioactifs émettant des rayonnements alpha est nécessaire pour plusieurs raisons. Elle permet la classification des colis de déchets radioactifs en vue de leur stockage en satisfaisant aux normes en vigueur concernant les niveaux d'activité. Elle permet la classification de ces colis sur le site de production (installations de retraitement) pour vérifier que les matières fissiles résiduelles sont en quantités inférieures aux seuils tolérés. Elle permet également une évaluation de la nature et de la quantité des noyaux lourds contenus dans les colis pour évaluer la masse de matières fissiles quittant l'usine de retraitement.

Les méthodes radioactives, qui permettent un contrôle non intrusif et non destructif, sont bien adaptées à ces mesures. On distingue les méthodes de contrôle passives et les méthodes de contrôle actives.

Les méthodes passives sont basées sur la détection des neutrons provenant de fissions spontanées ou des interactions des particules alpha avec des éléments légers produisant également des neutrons, et/ou du rayonnement gamma émis spontanément par des radionucléides du colis.

Les méthodes actives utilisent un système d'interrogation permettant d'induire des réactions nucléaires qui sont ensuite analysées afin de déterminer quantitativement et parfois qualitativement le contenu en radioéléments des déchets nucléaires. Un dispositif de détection actif comprend par conséquent une source ou un générateur de neutrons, un modérateur de neutrons, généralement constitué par un matériau hydrocarboné et/ou hydrogéné, destiné à abaisser le niveau d'énergie des neutrons afin d'augmenter la probabilité de production des fissions induites et un détecteur pour détecter les neutrons et fournir des signaux correspondants à un système de mesure et de traitement de ces signaux. La plupart des détecteurs de neutrons étant essentiellement sensibles aux neutrons thermiques (par exemple les détecteurs proportionnels à $^3$He), les neutrons émis par fission spontanée ou les neutrons retardés ou les neutrons provenant des réactions ($\alpha$, n) doivent être ralentis pour augmenter la probabilité de détection.

On connaît déjà par la demande EP-A-0220099 un dispositif de détection de matière fissile du type actif. Ce dispositif comprend une source de neutrons, des panneaux réalisés en une matière apte à thermaliser les neutrons, et un bloc de détection de neutrons de fission logé à l'intérieur desdits panneaux. Ce dispositif permet la détection des neutrons spontanés lorsque la source de neutrons ne fonctionne pas ainsi que la détection des neutrons de fission émis après une bouffée de neutrons provenant de la source.

Toutefois, il ne permet pas la détection des rayonnements gamma spontanés (émis sans action de la source) et des gamma retardés.

On connaît également (NAGRA NTB 82-02, pages 88 et suivantes), un dispositif de comptage passif et actif des neutrons (Californium Shuffler System). Ce dispositif comporte une source de $^{252}$Cf logée à l'intérieur d'un château de protection, une enceinte à l'intérieur de laquelle on trouve une table tournante sur laquelle est placée l'unité de déchets mesurer, la rotation de la table étant destinée à assurer une certaine compensation de l'hétérogénéité de la répartition de la matière fissile à l'intérieur de la matrice non nucléaire. Le dispositif comporte en outre un ensemble de détection formé de plusieurs compteurs proportionnels à $^3$He disposés tout autour de l'enceinte. Un système de déplacement rapide de la source permet de faire passer celle-ci de sa position de repli à sa position active en l'espace d'une demi-seconde. Les compteurs sont reliés à un ensemble électronique de comptage et à un ordinateur pour le traitement des signaux.

Comme le précédent, ce dispositif ne permet pas la détection des rayonnements gamma spontanés et retardés.

Or, la détection des rayonnements gamma retardés permet de déterminer la masse totale de matière fissile contenue dans la matrice. En effet, le nombre moyen de gamma retardés émis par fisson dépend peu de l'isotope considéré. Il est donc représentatif de la masse totale de matière fissile. Par contre, le nombre de neutrons retardés émis par fission dépend de l'isotope considéré. Ainsi, connaissant à la fois le nombre de neutrons retardés et le nombre de gamma retardés, on peut faire le rapport du premier au second, ce qui permet de déterminer la composition des isotopes fissiles dans le conteneur mesuré.

La présente invention a pour objet un dispositif de caractérisation de matière fissile qui permet de mesurer non seulement les neutrons spontanés et retardés, mais en outre les rayonnements gamma spontanés et retardés de la fission induite au moyen d'une source de rayonnement neutronique.

Ce but est atteint, conformément à l'invention, par le dispositif de caractérisation de matière fissile tel que défini dans la revendication 1.

Grâce à cette caractéristique, on obtient un dispositif de forme compacte dont les dimensions peuvent être avantageusement réduites par le fait qu'il n'est pas nécessaire de prévoir en outre un matériau modérateur en plus du matériau scintillateur, et qui permet de déterminer quantitativement et qualitativement la composition de la matière fissile.

De préférence, l'enceinte comporte en outre une seconde paroi entourant la paroi réalisée en un matériau scintillateur plastique, ladite seconde paroi étant réalisée en un matériau thermalisant et absorbant les neutrons, une couche de plomb étant en outre disposée autour de ladite seconde paroi.

D'autres caractéistiques et avantages de l'invention apparaîtront encore à la lecture de la description qui suit d'un exemple de réalisation donné à titre illustratif et nullement limitatif, en référence aux figures annexées, sur lesquelles :

    — la figure 1 est une section en élévation d'un dispositif de caractérisation de matière fissile conforme à l'invention ;

    — la figure 2 est une vue en coupe selon la ligne II-II de la figure 1 ;

    — la figure 3 est une vue de détail qui illustre un moyen pneumatique permettant de déplacer la source entre le château de protection de repli et l'intérieur de l'enceinte de mesure et de détection.

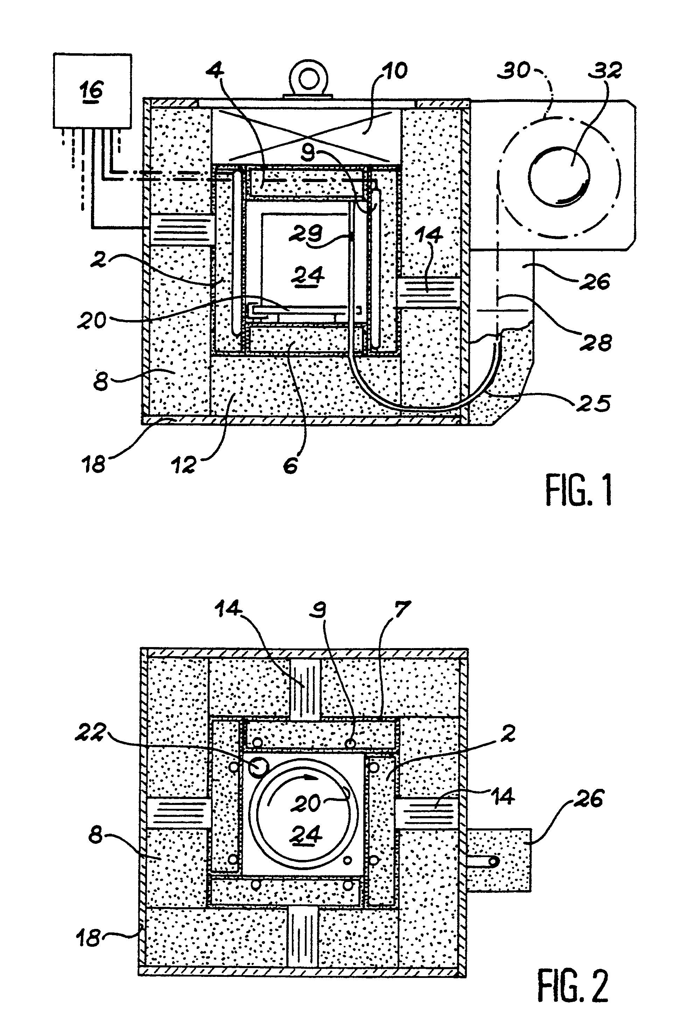

Comme représenté sur les figures 1 et 2, le dispositif de caractérisation de matière fissile comprend une enceinte entièrement fermée constitué de quatre parois verticales 2 (voir en particulier figure 2), d'un fond supérieur 4 et d'un fond inférieur 6. Chacune de ces parois est réalisée en un matériau scintillateur plastique apte à engendrer un scintillement sous l'effet d'un rayonnement gamma. Le matériau scintillateur est de préférence de l'Altustipe®, qui est un Plexiglas additionné d'anthracène. Le matériau scintillateur présente également conformément à l'invention, la propriété de servir de modérateur pour thermaliser les neutrons rapides. Chacune des parois 2, 4 et 6 est recouverte de matériau 7 opaque à la lumière mais transparent aux neutrons et au rayonnement gamma, par exemple le polychlorure de vinyle opaque. Ce matériau présente en outre l'avantage de s'activer très peu sous l'effet des rayonnements gamma et, par suite, de produire peu de bruit de fond qui viendrait fausser les mesures.

Des détecteurs de neutrons 9, constitués par exemple par des tubes $^3$He sont noyés dans les plaques 2. Comme on peut le voir sur la figure 2, il y a huit détecteurs dans le mode de réalisation représenté. Un photomultiplicateur 14 est associé à chacune des parois scintillatrices 2. Il y a quatre photomultiplicateurs dans l'exemple de réalisation considéré. Les photomultiplicateurs 14 sont aptes à amplifier le scintillement se produisant dans les plaques scintillatrices et à produire un signal électrique proportionnel à ce scintillement. Les photomultiplicateurs 14 et les détecteurs de neutrons 9 sont reliés à un ensemble de mesure de traitement du signal désigné schématiquement par la référence 16.

Les parois 2, 4 et 6 sont en outre entourées par une seconde paroi de plus forte épaisseur, par exemple 200 mm, réalisée en un matériau hydrocarboné ou hydrogéné par exemple le polyéthylène. Elle est constituée de quatre parois 8, d'un bouchon 10 et d'un fond 12. Cette seconde paroi participe à la thermalisation des neutrons. Elle absorbe en outre les neutrons parasites venant de l'extérieur et qui pourraient fausser les mesures. En effet, le dispositif de l'invention est appelé à être utilisé à proximité d'autres sources de rayonnement, par exemple des déchets radioactifs, et les rayonnements provenant de ces sources pourraient pénétrer à l'intérieur de l'enceinte, ce qui aurait pour conséquence de fausser les mesures. Enfin, les parois 8, 10, 12 constituent en même temps une protection biologique qui absorbe les neutrons provenant de la source disposée à l'intérieur de l'enceinte, ce qui protège les opérateurs.

L'ensemble est en outre entouré d'une couche protectrice de plomb, par exemple de 20 mm d'épaisseur, constituée de plaques 18. Cette couche de plomb protectrice a une double fonction. D'une part, elle assure la protection de l'environnement extérieur contre les rayonnements gamma présents à l'intérieur de l'enceinte. D'autre part, elle empêche la pénétration des rayons gamma qui pourraient provenir de sources extérieures. A l'intérieur de l'enceinte, on trouve un plateau tournant 20 entraîné par un moteur 22. Un panier 24 est placé sur le plateau tournant 20. Le panier comporte une chemise étanche amovible permettant d'éviter la contamination de l'enceinte. Le colis contenant la matière nucléaire à évaluer est introduit dans l'enceinte par sa partie supérieure en retirant la plaque 10 formant un bouchon puis la plaque 4. Ces plaques sont ensuite remises en place de telle sorte que l'enceinte est entièrement fermée.

Le dispositif comporte encore des moyens qui permettent d'introduire rapidement une source de rayonnement neutronique, par exemple une source 29 de $^{252}$Cf à l'intérieur de l'enceinte. Selon une première réalisation, ces moyens sont constitués par un tube guide connecté à l'une de ses extrémités à un château de repli 26 situé à l'extérieur de l'enceinte. Ce château de repli a pour but de recevoir la source 29 lorsqu'elle n'est pas en fonctionnement en protégeant l'environnement extérieur du rayonnement émis par la source. Le tube guide 25 traverse les parois de protection de l'enceinte, respectivement la paroi de plomb 18 puis les plaques de polyéthylène 8, 12 et enfin le matériau scintillateur 6. Un câble flexible 28 est fixé à l'une de ses extrémités à un tambour tournant 30. A son autre extrémité, le câble flexible 28 est fixé à la source. Le tambour 30 est entraîné en rotation au moyen d'un moteur, par exemple un moteur pas à pas 32 dont la rotation dans un sens permet d'introduire la source à l'intérieur de l'enceinte et la rotation dans l'autre sens de retirer cette source hors de l'enceinte.

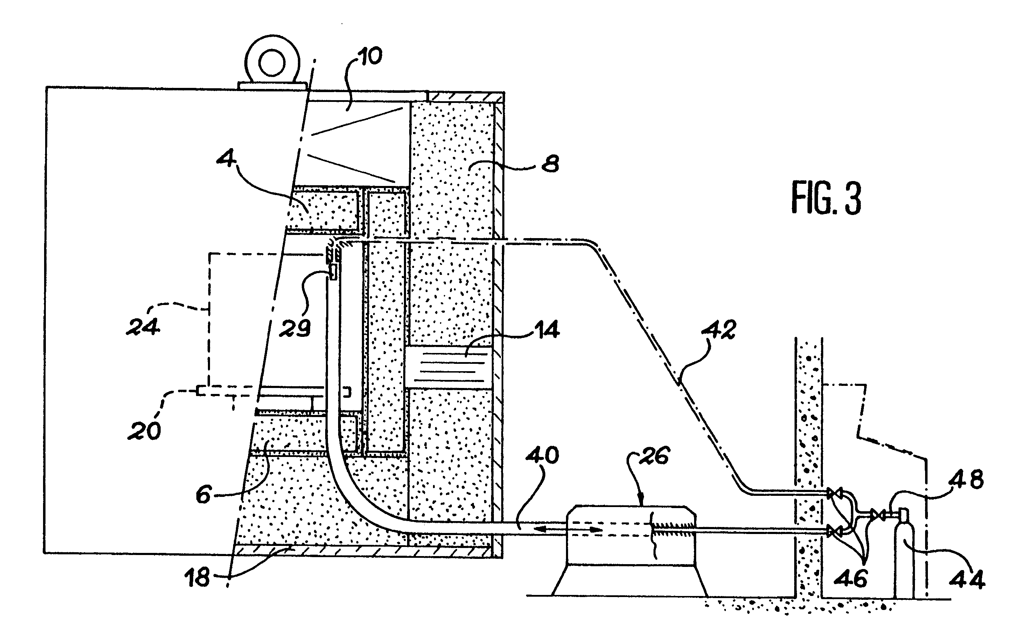

Selon la variante de réalisation représentée sur la figure 3, les moyens pour introduire la source 29 à l'intérieur de l'enceinte et pour la retirer sont pneumatiques. Ils comportent un tube guide 40 de section intérieure suffisamment importante pour permettre le passage de la source 29. A l'une de ses extrémités, le tube 40 débouche à l'intérieur de l'enceinte et, à son autre extrémité, il est relié au château de protection de repli 26. D'autre part, les moyens comportent un tube 42 de section plus petite que la section du tube 40, de telle sorte que la source 29 ne peut pas pénétrer à l'intérieur de ce tube 42. Les extrémités du tube 42 débouchent en face des extrémités du tube 40. Le tube 42 est relié à une source de gaz comprimé 44, par exemple une bouteille d'air comprimé. Différentes vannes 46 placées sur le tube 42 et sur un tube 48 reliant le tube 42 à la bouteille de gaz comprimé 44 permettent de propulser pneumatiquement la source 29 avec une grande célérité pour l'introduire à l'intérieur de l'enceinte ou pour la faire revenir dans le château 26.

## Revendications

1. Dispositif de caractérisation de matière fissile comprenant une enceinte destinée à recevoir une quantité de matière fissile contenue dans un récipient, une source émettrice de neutrons (29) pour bombarder ladite matière fissile, des moyens (25, 28, 30) pour introduire ladite source (29) à l'intérieur de l'enceinte et pour retirer la source hors de cette enceinte, des moyens (9) de détection du rayonnement neutronique, des moyens modérateurs (2, 4, 6) pour thermaliser un rayonnement de fission émis par ladite matière fissile, ces moyens (2, 4, 6) étant interposés entre les moyens (9) de détection du rayonnement neutronique et la matière fissile, caractérisé en ce qu'il comporte en outre des moyens (2, 4, 6, 14) de détection du rayonnement gamma produits par fission induite, ces moyens comprenant un matériau scintillateur (2, 4, 6) et au moins un photomultiplicateur (14) associé audit matériau scintillateur (2, 4, 6) et le matériau scintillateur (2, 4, 6) constituant également le modérateur pour thermaliser les neutrons rapides émis directement par la source (29) ainsi que les neutrons provenant des fissions spontanées des réactions (α, n) et les neutrons provenant des fissions induites dans la matière fissile, les détecteurs du rayonnement neutronique (9) étant noyés dans le matériau (2, 4, 6) scintillateur constituant le modérateur.

2. Dispositif selon la revendication 1, caractérisé en ce qu'il comporte des parois réalisées en un matériau scintillateur plastique (2, 4, 6), au moins un détecteur (9) de neutron noyé dans la masse du scintillateur (2, 4, 6) plastique, un photomultiplicateur (14) associé à chaque scintillateur, des moyens électroniques (16) de traitement du signal émis par les photomultiplicateurs (14) et par les détecteurs neutroniques (9).

3. Dispositif selon la revendication 2, caractérisé en ce que l'enceinte comporte en outre une seconde paroi (8, 10, 12) entourant la paroi réalisée en un matériau scintillateur (2, 4, 6) plastique, ladite seconde paroi (8, 10, 12) étant réalisée en un matériau thermalisant et absorbant les neutrons, une couche de plomb (18) étant en outre disposée autour de ladite seconde paroi.

4. Dispositif selon la revendication 3, caractérisé en ce que le matériau absorbant les neutrons est un matériau hydrocarboné et/ou hydrogéné.

5. Dispositif selon l'une quelconque des revendications 2 à 4, caractérisé en ce que les faces des plaques (2, 4, 6) de matériau scintillateur plastique sont recouvertes d'un matériau (7) opaque à la lumière mais transparent aux neutrons et aux rayonnements gamma et s'activant peu sous l'action de ces rayonnements.

6. Dispositif selon la revendication 5, caractérisé en ce que le matériau (7) recouvrant les plaques est du chlorure de polyvinyle opaque.

7. Dispositif selon l'une quelconque des revendications 1 à 6, caractérisé en ce que les moyens pour introduire la source de rayonnement neutronique dans l'enceinte et pour retirer cette source hors de ladite enceinte comprennent un tambour (30) monté tournant et entraîné en rotation par un moteur pas à pas (32), un câble (28) fixé à une extrémité au tambour (30) et à une autre extrémité à la source de rayonnement neutronique (29), et un tube (25) reliant l'intérieur de l'enceinte à un château de protection de repli (26) situé à l'extérieur de ladite enceinte.

8. Dispositif selon l'une quelconque des revendications 1 à 6, caractérisé en ce que les moyens pour introduire ladite source de rayonnements neutroniques à l'intérieur de l'enceinte et pour retirer cette source hors de l'enceinte comprennent un château de protection de repli (26) situé à l'extérieur de l'enceinte, un tube guide (40) relié à une première extrémité au château de protection (26) et à une seconde extrémité à l'intérieur de l'enceinte, un moyen pneumatique pour propulser ladite source de rayonnement neutronique à l'intérieur du tube guide, ce moyen pneumatique étant constitué par une canalisation (42) reliée d'une part à la première extrémité du tube guide (40) et d'autre part à la seconde extrémité de ce tube guide, et connectée par l'intermédiaire de vannes (46) à une source de gaz comprimé (44) permettant de relier la première ou la seconde extrémité du tube guide à cette source de gaz comprimé (44).

## Patentansprüche

1. Vorrichtung zum Charakterisieren spaltbarer Materie mit einer Hülle, die dazu bestimmt ist eine Menge von in einem Rezipienten enthaltener, spaltbarer Materie aufzunehmen, einer Neutronenquelle (29), um die spaltbare Materie zu bestrahlen, Vorrichtungen (25, 28, 30), um die Quelle (29) in das Innere der Hülle einzuführen und die Quelle aus der Hülle herauszuführen, Vorrichtungen (9) zum Feststellen von Neutronenstrahlung, Moderatorvorrichtungen (2, 4, 6), um eine von der spaltbaren Materie abgestrahlte Spaltstrahlung zu thermalisieren, wobei diese Vorrichtungen (2, 4, 6) zwischen den Detektionsvorrichtungen (9) für die Neutronenstrahlung und der spaltbaren Materie angeordnet sind, dadurch gekennzeichnet, daß sie außerdem Detektionsvorrichtungen (2, 4, 6, 14) zur Detektion der durch induzierte Spaltung erzeugten Gammastrahlung umfassen, wobei diese Vorrichtungen ein Szintillationsmaterial (2, 4, 6) und wenigstens einen mit diesem Szintillationsmaterial (2, 4, 6) verbundenen Photovervielfacher (14) umfassen und wobei das Szintillationsmaterial (2, 4, 6) zugleich den Moderator zum Thermalisieren der schnellen Neutronen, die direkt von der quelle (29) abgestrahlt werden, und der Neutronen, die von der spontanen Spaltung der Reaktionen ($\alpha$, n) herrühren, und der Neutronen, die von den induzierten Spaltungen der spaltbaren Materie herrühren, bildet, wobei die Detektoren (9) für die Neutronenstrahlung in dem den Moderator bildenden Szintillationsmaterial (2, 4, 6) eingetaucht sind.

2. Vorrichtung nach Anspruch 1, dadurch gekennzeichnet, daß sie umfaßt : aus einem Plastikszintillationsmaterial (2, 4, 6) gebildete Wände, wenigstens einen in die Plastikszintillationsmasse (2, 4, 6) eingebetteten Neutronendetektor (9), einen mit jedem Szintillator verbundenen Photovervielfacher (14), elektronische Verarbeitungsvorrichtungen (16) für das von den Photovervielfachern (14) und von den Neutronendetektoren (9) ausgesandte Signal.

3. Vorrichtung nach Anspruch 2, dadurch gekennzeichnet, daß die Hülle außerdem eine zweite Wand (8, 10, 12) umfaßt, die die erste Wand aus einem Plastikszintillationsmaterial (2, 4, 6) umgibt, wobei die zweite Wand (8, 10, 12) aus einem Material besteht, das die Neutronen thermalisiert und absorbiert, wobei außerdem eine Bleischicht (18) um die zweite Wand angeordnet ist.

4. Vorrichtung nach Anspruch 3, dadurch gekennzeichnet, daß das die Neutronen absorbierende Material ein mit Kohlenwasserstoffen und/oder Wasserstoff versetztes Material ist.

5. Vorrichtung nach einem der Ansprüche 2 bis 4, dadurch gekennzeichnet, daß die Vorderseiten der Platten (2, 4, 6) aus Plastikszintillationsmaterial mit einem für Licht undurchlässigen aber für die Neutronen und die Gammastrahlen transparenten Material (7) bedeckt sind, das sich unter der Einwirkung dieser Strahlen aktiviert.

6. Vorrichtung nach Anspruch 5, dadurch gekennzeichnet, daß das Material, das die Platten bedeckt undurchsichtiges Polyvinylchlorid ist.

7. Vorrichtung nach einem der Ansprüche 1 bis 6, dadurch gekennzeichnet, daß die Vorrichtungen zum Einführen der Neutronenstrahlungsquelle in die Hülle und zum Zurückführen dieser Quelle aus der Hülle eine drehbar montierte Walze (30), die von einem Schrittmotor (32) in Bewegung versetzt wird, ein Kabel (28), das mit einem Ende an der Walze (30) und einem anderen Ende an der Neutronenstrahlungsquelle (29) befestigt ist, und ein Rohr (25) umfassen, das das Innere der Hülle mit einem Faltungsschutzbehälter (26) außerhalb der Hülle verbindet.

8. Vorrichtung nach einem der Ansprüche 1 bis 6, dadurch gekennzeichnet, daß die Vorrichtungen zum Einführen der Neutronenstrahlungsquelle in die Hülle und zum Zurückführen dieser Quelle aus der Hülle einen Faltungsschutzbehälter (26) außerhalb der Hülle, ein mit einem ersten Ende mit dem Schutzbehälter (26) und mit einem zweiten Ende mit dem Inneren der Hülle verbundenes Führungsrohr (40), und eine pneumatische Vorrichtung umfaßt, um die Neutronenstrahlungsquelle in das Innere des Führungsrohrs voranzutreiben, wobei diese pneumatische Vorrichtung aus einem Kanal (42) besteht, der auf der einen Seite mit dem ersten Ende des Führungsrohrs (40) und auf der anderen Seite mit dem zweiten Ende des Führungsrohrs verbunden ist und über Ventile (46) mit einer Quelle für komprimiertes Gas (44) verbunden ist, die ermöglicht, das erste oder das zweite Ende des Führungsrohrs mit dieser Quelle für komprimiertes Gas (44) zu verbinden.

## Claims

1. Apparatus for characterizing fissile material comprising an enclosure for receiving a quantity of fissile material contained in a receptacle, a neutron emitting source (29) for bombarding said fissile material, means (25, 28, 30) for introducing said source (29) into the enclosure and for removing it from said enclosure, neutron radiation detection means (9), moderator means (2, 4, 6) for thermalizing a fission radiation emitted by said fissile material, means (2, 4, 6) being interposed between the neutron radiation detection means (9) and the fissile material, characterized in that it also has detection means (2, 4, 6, 14), for the gamma radiation produced by induced fission, which incorporate a scintillator material (2, 4, 6) and at least one photomultiplier (14) associated with said scintillator material (2, 4, 6), the scintillator material (2, 4, 6) also constituting the moderator for thermalizing the fast neutrons directly emitted by source (29), as well as the neutrons resulting from spontaneous fissions of the $\alpha$, n reactions and the neutrons resulting from fissions introduced in the fissile material, the neutron radiation detectors (9) being embedded in the scintillator material (2, 4, 6) constituting the moderator.

2. Apparatus according to claim 1, characterized in that it has walls made from a plastic scintillator material (2, 4, 6), at least one neutron detector (9) embedded in the plastic scintillator material (2, 4, 6), a photomultiplier (14) associated with each scintillator and electronic means (16) for processing the signal emitted by the photomultipliers (14) and the neutron detectors (9).

3. Apparatus according to claim 2, characterized in that the enclosure also has a second wall (8, 10, 12) surrounding the wall made from a plastic scintillator material (2, 4, 6), said second wall (8, 10, 12) being made from a neutron absorbing, thermalizing material, a lead layer (18) also being placed around said second wall.

4. Apparatus according to claim 3, characterized in that the neutron absorbing material is a hydrocarbon-containing and/or hydrogen-containing material.

5. Apparatus according to any one of the claims 2 to 4, characterized in that the faces of the plastic scintillator material plates (2, 4, 6) are covered with a material (7), which is opaque to light, but transparent to neutrons and gamma radiation and which is only slightly activated under the action of said radiation.

6. Apparatus according to claim 5, characterized in that the material (7) covering the plates is opaque polyvinyl chloride.

7. Apparatus according to any one of the claims 1 to 6, characterized in that the means for introducing the neutron radiation source into the enclosure and for removing said source from the enclosure comprise a drum (30) mounted in rotary manner and rotated by a stepping motor (32), a cable (28) fixed by one end to drum (30) and by the other end to the neutron radiation source (29), as well as a tube (25) connecting the interior of the enclosure to a foldback protective casket (26) located outside said enclosure.

8. Apparatus according to any one of the claims 1 to 6, characterized in that the means for introducing said neutron radiation source into the enclosure and for removing said source from the enclosure comprise a foldback protective casket (26) located outside the enclosure, a guide tube (40) connected by a first end to the protective casket (26) and by a second end to the interior of the enclosure, a pneumatic means for propelling said neutron radiation source within the guide tube, said pneumatic means being constituted by a duct (42) connected on the one hand to the first end of the guide tube (40) and on the other hand to the second end of said guide tube and connected by means of valves (46) to a compressed gas source (44) making it possible to connect the first or second end of the guide tube to said compressed gas source (44).

FIG. 1

FIG. 2

FIG. 3